(19) Europäisches Patentamt
European Patent Office
Office européen des brevets

(11) Veröffentlichungsnummer: **0 551 850 A1**

(12) # EUROPÄISCHE PATENTANMELDUNG

(21) Anmeldenummer: **93100280.2**

(22) Anmeldetag: **11.01.93**

(51) Int. Cl.$^5$: **C08K 5/5313**, C07F 9/36, C07F 9/6509, C08L 67/02

(30) Priorität: **16.01.92 DE 4200931**

(43) Veröffentlichungstag der Anmeldung: **21.07.93 Patentblatt 93/29**

(84) Benannte Vertragsstaaten: **DE ES FR GB IT**

(71) Anmelder: **HOECHST AKTIENGESELLSCHAFT**
**Postfach 80 03 20**
**W-6230 Frankfurt am Main 80(DE)**

(72) Erfinder: **Blöcker, Erich, Dr.**
**Cheruskerstrasse 7**
**W-6238 Hofheim/Ts(DE)**

(54) **Flammgeschützte thermoplastische Polyesterformmasse und ihre Verwendung.**

(57) Flammgeschützte thermoplastische Polyesterformmasse aus
(A) einem oder mehreren thermoplastischen Polyester,
(B) einer stickstoffhaltigen Diphosphinsäure-Verbindung der Formel (I),
(C) gegebenenfalls einem Amin,
(D) gegebenenfalls anorganischen Verstärkungsmitteln und
(E) gegebenenfalls Verarbeitungshilfmitteln.

Die stickstoffhaltigen Diphosphinsäure-Verbindungen sind bereits bei relativ geringen Zusatzmengen wirksam und ergeben somit keine Einbußen an den mechanischen und elektrischen Eigenschaften der flammhemmend eingestellten Polyestermassen. Diese werden zur Herstellung von Formkörpern verwendet.

EP 0 551 850 A1

Die Erfindung bezieht sich auf flammgeschützte Formmassen aus thermoplastischen Polyestern, die stickstoffhaltige Diphosphinsäure- Verbindungen enthalten und ihre Verwendung zur Herstellung von Formkörpern.

Als Flammschutzmittel für thermoplastische Polyester werden bisher überwiegend bromhaltige Verbindungen verwendet, im allgemeinen in Kombination mit einer synergistisch wirkenden anorganischen Verbindung (J. Troitzsch, "Kunststoffe" 80, 434 - 435 (1990)). Aufgrund der ökologisch umstrittenen polybromierten Diphenylether und der im Brandfall entstehenden toxischen und korrosiven Gase gibt es intensive Bemühungen, halogenfreie Flammschutzmittel für Kunststoff-Formulierungen zu entwickeln (H. Staendeke und D.J. Scharf, "Kunststoffe" 79, 1200 - 1204 (1989)).

Als halogenfreie Flammschutzsysteme für thermoplastische Polyester kommen hauptsächlich Phosphorverbindungen in Frage. So sind z.B. für Polyethylenterephthalat-Formmassen Polyalkylphosphonate als Flammschutzmittel beschrieben (EP-A 0 324 356). Es sind flammgeschützte Polybutylenterephthalat-Zusammensetzungen bekannt, die eine Kombination von Polypentaerythritphosphonat und Melaminpyrophosphat enthalten (US-PS 4 278 591). Für die Herstellung eines flammhemmenden Polybutylenterephthalats wird auch das entsprechende Polypentaerythritphosphonat in Kombination mit Ammoniumpolyphosphat und einem halogenierten Benzolsulfonat eingesetzt (EP-A 0 383 978).

Ferner sind Phosphonsäuresalze enthaltende flammfeste Polymerzusammensetzungen beschrieben worden (EP-A 0 245 207). Eigene Versuche mit Polybutylenterephthalat zeigen aber nur eine geringe Erhöhung des Sauerstoffindex und bewirken damit eine UL 94 Einstufung nach V-2. Auch sind Phosphinsäuresalze als Additive zur Herstellung von schwerentflammbaren Kunststoffen bekannt (DE-OS 24 47 726). Diese mono-, di- und trifunktionellen Phosphinsäuresalze enthalten 1, 2 bzw. 3 Stickstoffatome in Carbonamid-Bindung und ein Metall aus den ersten drei Gruppen des Periodensystems als Kation. In den aufgeführten Beispielen ist nur ein Monophosphinsäure-Natriumsalz als Flammschutzmittel beschrieben, das zusätzlich halogenhaltig ist und z.B. Brom enthält.

Die Anwendung von flammhemmenden phosphororganischen Additiven, die in organischen Lösungsmitteln gut löslich sind, verursacht häufig einen Weichmachereffekt. Dies führt im allgemeinen zu einer erheblichen Einbuße an den mechanischen und elektrischen Eigenschaften des flammhemmend eingestellten Kunststoffs.

Es ist daher erwünscht solche Additive zu finden, die die genannten Nachteile nicht aufweisen.

Die Erfindung betrifft eine flammgeschützte thermoplastische Polyestertormmasse aus

(A) einem oder mehreren thermoplastischen Polyester,

(B) einer stickstoffhaltigen Diphosphinsäure-Verbindung der Formel (I):

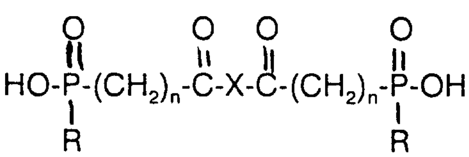

(I)

worin X für folgende stickstoffhaltige Reste steht:

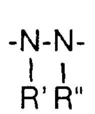 , 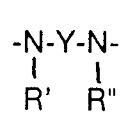 , 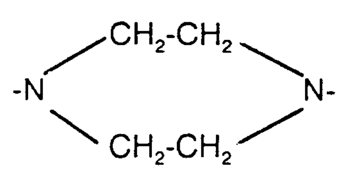

in denen R für $C_1$-$C_8$- vorzugsweise $C_1$-$C_4$-Alkyl oder Aryl mit 6 C-Atomen, R' und R" für Wasserstoff oder $C_1$-$C_8$- vorzugsweise $C_1$-$C_4$-Alkyl steht, Y ein zweiwertiger aliphatischer, cycloaliphatischer oder aromatischer Kohlenwasserstoffrest ist und n eine ganze Zahl 1, 2, 3, 4 oder 5, vorzugsweise 1 oder 2, und besonders bevorzugt 2 ist,

(c) gegebenenfalls einem Amin,

(D) gegebenenfalls anorganischen Verstärkungsmitteln und

(E) gegebenenfalls Verarbeitungshilfsmitteln

Gegenstand der Erfindung sind außerdem flammgeschützte thermoplastische Polyestermassen, bei denen die Komponente (C) mit der Komponente (B) unter Bildung eines Salzes zur Reaktion gebracht worden ist

(Komponente (BC)), und die Komponente (BC) anstelle der beiden Einzelkomponenten eingesetzt wird.

Die stickstoffhaltigen, halogenfreien Diphosphinsäuren lassen sich aufgrund ihrer symmetrischen Struktur und ihres hohen Schmelzpunktes von im allgemeinen über 200 °C in thermoplastische Polyester, wie Polybutylenterephthalat und Polyethylenterephthalat, einarbeiten, ohne diese wesentlich zu schädigen, und wirken ab einer bestimmten Konzentration als Flammschutzmittel. Die notwendige Menge des Flammschutzmittels hängt ab von dem Polyester und dem gegebenenfalls eingesetzten Verstärkungs- oder Füllstoff. Diese Diphosphinsäuren verursachen im allgemeinen auch kein unerwünschtes Weichmachen der Polyester.

Die erfindungsgemäß eingesetzten Polyester (A) stellen Polykondensationsprodukte aus aromatischen Dicarbonsäuren und aliphatischen Diolen oder jeweils deren reaktionsfähigen Derivaten dar. Bis zu 10 Mol-% der aromatischen Dicarbonsäure kann durch eine andere Dicarbonsäure ersetzt sein. Ebenfalls kann bis zu 10 Mol-% des aliphatischen Diols, das z. B. auch 1,4-Dimethylolcyclohexan sein kann, durch ein anderes Diol ersetzt sein, z. B. auch durch ein Polyetherdiol, so daß die Eigenschaften des eingesetzten Polyesters variiert werden können. Das Polybutylenterephthalat ist wegen seiner schnellen Kristallistion aus der Schmelze der bevorzugt eingesetzte Polyester in den flammgeschützten Polyesterformmassen. Aber auch das Polyethylenterephthalat wird für Polyesterformmassen verwendet, vorzugsweise wenn es Nukleierungsmittel und gegebenenfalls auch noch organische Weichmacher als Kristallisationsbeschleuniger enthält, damit es bei der Verarbeitung zu Formmassen genügend schnell kristallisiert. Es können aber auch Mischungen aus verschiedenen Polyestern eingesetzt werden, z. B. Mischungen aus PBT und PET. Die einzelnen Polyester werden gemeinsam mit den Flammschutzkomponenten und den weiteren Zusätzen compoundiert und verarbeitet.

Die verwendeten Diphosphinsäuren (B) werden durch eine chemische Umsetzung von z. B. eines in 2-Stellung alkyl- oder arylsubstituierten 2,5-Dioxo-1,2-oxaphospholans (im nachfolgenden Oxaphospholan genannt) mit Diaminen erhalten:

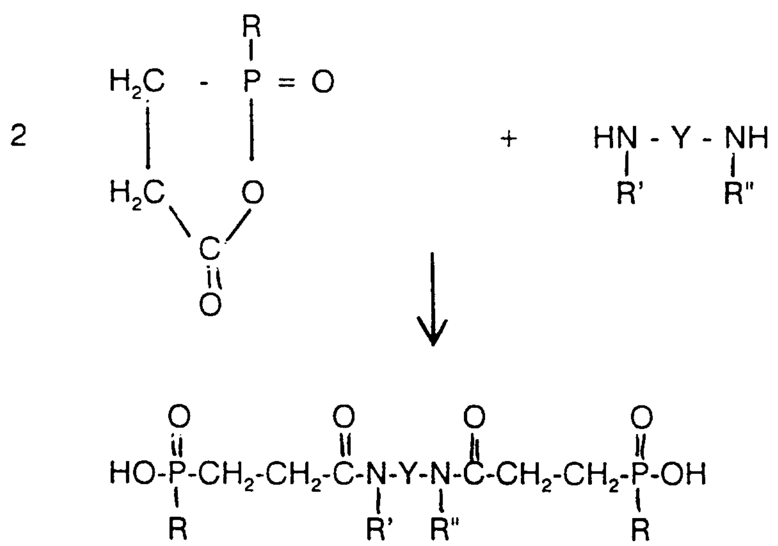

(II)

wobei Y, R, R' und R" wie oben definiert sind.

Beispielsweise kann als Diamin auch Piperazin verwendet werden:

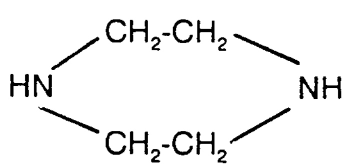

Die Reaktion des Oxaphospholans mit dem Diamin wird zweckmäßigerweise in Gegenwart eines flüssigen Reaktionsmediums durchgeführt, in dem die Ausgangssubstanzen bei Raumtemperatur oder erhöhter Temperatur löslich sind, vorzugsweise bei 80 bis 150 °C. Je nach Reaktivität des verwendeten Diamins erfolgt die Umsetzung durch Erwärmen der Mischung der Reaktionspartner im Lösemittel (bei aromatischen

Diaminen) oder durch dosierte Zugabe eines der beiden Reaktionspartner bei erhöhter Temperatur, bevorzugt ab mindestens 80 °C, zu der Lösung der anderen Ausgangskomponente (bei aliphatischen Diaminen), da hier eine exotherme Reaktion eintritt. Das Reaktionsprodukt fällt im allgemeinen als kristalline, schwerlösliche Verbindung bei der Reaktionstemperatur oder bei niedrigerer Temperatur aus dem Lösemittel aus und kann daraus nach üblichen Methoden isoliert werden. Durch Reaktion von 2- Methyl-2,5-dioxo-1,2-oxaphospholan mit verschiedenen Diaminen in Dimethylformamid als Reaktionsmedium wurden die in Tabelle 1 aufgeführten Verbindungen erhalten.

Die Diphosphinsäuren (B) können als solche den Polyestern (A) als flammhemmende Additive zugesetzt werden. Sie führen im allgemeinen aufgrund ihrer symmetrischen Struktur und des dadurch bedingten hohen Schmelzpunktes nicht zu einer wesentlichen Wechselwirkung mit der Polyestermatrix, d. h. zu keinem wesentlichen Abbau des Polyesters und einer dadurch bedingten starken Verschlechterung der physikalischen Eigenschaften der hergestellten Formkörper. Die Menge der den Polyestern als flammhemmende Mittel zuzusetzenden Diphosphinsäuren kann innerhalb weiter Grenzen variieren. Im allgemeinen verwendet man 1 bis 40 Gewichtsteile, bezogen auf 100 % der Gesamtmischung, bevorzugt 5 bis 30 Gewichtsteile und insbesondere 10 bis 25 Gewichtsteile. Die optimale Menge hängt von dem verwendeten Polyester bzw. der Polyestermischung ab und von der eingesetzten Diphoshinsäure-Komponente und kann leicht durch Versuche ermittelt werden. Da die Diphosphinsäuren im allgemeinen schon bei geringen Zusatzmengen wirksam sind, verursachen sie im Polyester gegenüber anderen, bekannten flammhemmenden Mitteln auf Phosphor-Basis weniger unerwünschte Effekte.

Es ist auch möglich, geeignete temperaturstabile, schwerflüchtige Amine als weiteren Zusatz bei der Herstellung der flammgeschützten Polyestermischung zuzugeben. Diese Amine können dann zumindest teilweise, je nach zugesetzter Menge, in der Polyesterschmelze während des Compoundierprozesses und während des Spritzgießens mit der zugesetzten Diphosphinsäure unter Salzbildung ohne Wasserabspaltung reagieren. Dadurch kann eine teilweise oder vollständige Neutralisation der Phosphinsäuregruppen des flammhemmenden Additivs bewirkt werden, wodurch unter Umständen die Wechselwirkung der Diphosphinsäure (B) mit der Polyester-Matrix (A) weiter vermindert oder sogar ganz aufgehoben wird und die physikalischen Eigenschaften der flammhemmend eingestellten Polyestermischung bzw. der daraus hergestellten Formkörper verbessert werden. Daher können beim Compoundieren infolge der getrennten Zugabe der Phosphinsäure- und der Amin-Komponente die Eigenschaften der flammgeschützten Mischung gezielt eingestellt und optimiert werden.

Als Amine zur Einarbeitung in die flammgeschützten Polyestermassen gemäß der Erfindung haben sich besonders 1,3,5-Triazin-Derivate bewährt, z. B. das 2,4,6-Triamino-1,3,5-triazin (Melamin) oder das 2,4-Diamino-6-phenyl-1,3,5-triazin (Benzoguanamin). Es können aber auch andere Aminoverbindungen eingesetzt werden, sofern sie bei den Compoundiertemperaturen nicht wesentlich flüchtig sind.

Es ist auch möglich, erst aus den Diphosphinsäuren Aminsalze herzustellen und diese als Flammschutzadditive (BC) einzusetzen. Zum Beispiel können aus den Diphosphinsäuren (B) mit den Aminen (C), z.B. Melamin, durch Reaktion in polarem Lösungsmittel - bevorzugt in wäßriger Phase und bei höheren Temperaturen - im Molverhältnis 1:1 oder 1:2 die entsprechenden Aminsalze hergestellt werden. Diese Salze führen als Flammschutzmittel in Polyestern zu praktisch den gleichen Produkteigenschaften wie eine Zugabe der Einzelkomponenten.

Als anorganische Verstärkungsmittel (D) können Glasfasern, Glaskugeln und mineralische Füllstoffe oder auch Mischungen derselben eingesetzt werden.

Außerdem können die erfindungsgemäßen Zusammensetzungen weitere übliche Zusatzstoffe und Verarbeitungshilfsmittel (E) enthalten, wie Entformungsmittel, Fließhilfsmittel, Kristallisationshilfsmittel, Hitze- und Lichtstabilisatoren, UV- Absorber, Antioxidantien, antistatische Mittel, Haftvermittler, Antitropfmittel, Farbmittel und Farbpigmente sowie weitere flammhemmende Zusätze und Mittel zum Verringern der Rauchentwicklung. Diese Stoffe können jeweils allein oder in Kombination miteinander eingesetzt werden.

Die Herstellung der Mischungen aus den thermoplastischen Polyestern, der stickstoffhaltigen Diphosphinsäure-Verbindung und gegebenenfalls den weiteren Zusatzstoffen kann in den bekannten Mischaggregaten, wie Walzen, Knetern, Ein- und Mehrwellenextrudern, erfolgen. Bevorzugt werden Doppelschneckenextruder verwendet, um eine möglichst homogene Verteilung sämtlicher Komponenten in den Polyesterformmassen zu erhalten.

Die Weiterverarbeitung der so hergestellten flammhemmenden Massen zu Formkörpern kann auf den üblichen Verarbeitungsmaschinen erfolgen, z. B. mit Hilfe von Spritzgießmaschinen. Aber auch die Herstellung von Filmen und Fasern ist möglich.

Beispiele

I. Herstellung der Diphosphinsäuren

I.1. Diphosphinsäure II (siehe Tabelle 1) (Verwendung eines aromatischen Diamins)

173 g 1,3-Phenylendiamin, 453 g 2-Methyl-2,5-dioxo-1,2-oxaphospholan, 4,0 l Dimethylformamid wurden in einen 10 l-Kolben gegeben und unter Rühren aufgeheizt und aufgelöst. Nachdem die Innentemperatur ca. 100 °C erreichte, begann das Reaktionsprodukt auszufallen, wobei sich innerhalb weniger Minuten ein dicker Kristallbrei bildete. Die Reaktionstemperatur wurde anschließend bei 105 ± 5 °C für etwa 2 Stunden gehalten. Eine Erhöhung der Reaktionstemperatur auf über 120 °C ist nicht kritisch, nur wird die Ausbeute an dem Reaktionsprodukt geringer. Nach Abkühlung auf Raumtemperatur wurde das auskristallisierte Produkt abgesaugt und mit Methanol gewaschen bis zur Farblosigkeit des Filtrats. Ausbeute nach Trocknung ca. 565 g (ca. 94 % d. Th.), Eigenschaften siehe Tabelle 1.

I.2. Diphosphinsäure VI (siehe Tabelle 1) (Verwendung eines aliphatischen Diamins)

670 g 2-Methyl-2,5-dioxo-1,2-oxaphospholan und 5,0 l Dimethylformamid wurden in einem 10 l-Kolben mit Rührer bis auf ca. 95 ± 5 °C erhitzt und 144 g 1,2- Diaminoethan zugetropft, wobei die Temperatur der Reaktionsmischung infolge der exothermen Reaktion ohne zusätzliche Heizung anstieg. Die Zugabe des Diamins wurde derart dosiert, daß die Innentemperatur nicht über 140 °C, bevorzugt nicht über 130 °C, anstieg. Während der Zugabe des Diamins fiel die Diphosphinsäure aus der Reaktionsmischung aus. Nach Beendigung der Zugabe wurde noch 2 Stunden bei 120 ± 10 °C gerührt und nach Abkühlung auf Raumtemperatur das Produkt abgesaugt und mit Methanol gewaschen. Ausbeute nach Trocknung ca. 750 g (ca. 95 % d. Th.), Eigenschaften siehe Tabelle 1.

Die weiteren in Tabelle 1 aufgeführten Diphosphinsäuren wurden analog hergestellt.

II. Herstellung, Verarbeitung und Prüfung der Formmassen

Die Polyester wurden entweder in Granulatform oder als Mahlgut eingesetzt. Der Ausgangspolyester - z. B. Polybutylenterephthalat oder nukleiertes Polyethylenterephthalat - wurde mit den organischen Additiven (Flammschutzmittel und gegebenenfalls weitere Zusatzstoffe) gemischt und in einem Doppelschneckenextruder, z. B. einer ZSK 25 der Firma Werner & Pfleiderer (Stuttgart, Bundesrepublik Deutschland), geschmolzen, vermischt und zu Strängen extrudiert und granuliert. Die Massetemperaturen hängen von der verwendeten Polyestermischung ab, liegen aber im allgemeinen bei 240 bis 280 °C. Bei der Herstellung von glasfaserverstärkten oder mineralgefüllten Polyester-Zusammensetzungen wird die Glasfaser oder das Mineral getrennt von der Ausgangsmischung über einen zweiten Trichter des Doppelschneckenextruders in die schon aufgeschmolzene Masse dosiert.

Nach ausreichender Trocknung, z. B. 2 bis 6 Stunden bei 120 °C, wurden die Formmassen auf üblicherweise eingesetzten Spritzgußmaschinen bei ähnlichen Massetemperaturen wie bei der Extrusion und bei einer Formtemperatur von 80 bis 130 °C zu Formkörpern bzw. Normprüfstäben verspritzt. Die Reißfestigkeit und die Reißdehnung wurden an den Stäben nach DIN 53455 und die Kerbschlagzähigkeit nach IZOD nach der ISO-Norm 180/1A bestimmt,

Die Prüfung der Brandwidrigkeit erfolgte nach den Richtlinien der Underwriter Laboratories (UL 94-Test).

Die Mengen der eingesetzten Komponenten sind in den folgenden Beisielen in Gewichts-% angegeben.

Beispiele 1 bis 8 und Vergleichsbeispiel 1 (Tabelle 2)

Polyestermassen gemäß der Erfindung in unverstärkter Form wurden hergestellt durch Extrusion von Polybutylenterephthalat (PBT) mit verschiedenen Diphosphinsäuren (siehe Tabelle 1) in unterschiedlichen Konzentrationen und zum Teil zugesetztem Melamin. In Tabelle 2 sind die Rezepturen, die Ergebnisse der Brandprüfungen und einige mechanische Eigenschaften von spritzgegossenen Normprüfkörpern zusammengefaßt. Als Vergleichsbeispiel 1 wurde PBT ohne die Zusätze eingesetzt.

Beispiele 9 bis 19 und Vergleichsbeispiel 2 (Tabelle 3)

Glasfaserverstärkte Polyestermassen wurden hergestellt durch Extrusion von PBT mit verschiedenen Diphosphinsäuren (siehe Tabelle 1), zum Teil mit zugesetzter Amin-Base und mit Glasfaser-Zusatz. In

Tabelle 3 sind die Rezepturen und die Prüfergebnisse analog den Beispielen 1 - 8 (Tabelle 2) zusammengefaßt mit einem Vergleichsbeispiel 2, das keine Diphosphinsäure und kein Amin enthielt.

Beispiele 20, 21 und Vergleichsbeispiel 3 (Tabelle 4)

Glasfaserverstärkte Polyestermassen aus Polyethylenterephthalat (PET) wurden hergestellt durch Extrusion von ®Impet 2600 GV 1/30 (schnellkristallisierendes PET mit 30 % Glasfaserverstärkung, Schmelzindex MVI [265 °C/2,16kg]8 $cm^3$/10 min., Hersteller: Hoechst AG, Frankfurt am Main, Bundesrepublik Deutschland) mit verschiedenen Diphosphinsäuren (siehe Tabelle 1) ohne und mit zugesetzter Amin-Base. Im Vergleichsbeispiel 3 wurde anstelle der Diphosphinsäure und des Amins als Additiv Melamincyanurat in das PET eingearbeitet. In Tabelle 4 sind die Rezepturen und die Prüfergebnisse zusammengefaßt.

Beispiele 22 und 23 (Tabelle 5)

Aus der Diphosphinsäure II (DPS II) aus Tabelle 1 wurden zwei verschiedene Melaminsalze hergestellt:

a) DPS II-Melaminsalz 1:1

Durch Auflösen der molaren Mengen DPS II und Melamin in Wasser bei 90 - 100 °C und Kristallisation beim Abkühlen.

Analyse: P-Gehalt ber. 12,35 %, gef. 12,1/12,4 %
N-Gehalt ber. 22,3 %, gef. 22,2/22,4 %

b) DPS II-Melaminsalz 1:2

Durch Auflösen der DPS II mit der doppelten molaren Menge Melamin in Wasser bei 90 - 100 °C und Kristallisation beim Abkühlen.

Analyse: P-Gehalt ber. 9,9 %, gef. 9,7/9,8 %
N-Gehalt ber. 31,2 %, gef. 31,0/31,2 %.

Diese Diphosphinsäure-Melaminsalze wurden in glasfaserverstärkte Polyestermassen auf einem Extruder eingearbeitet durch Mischung mit Polybutylenterephthalat und Glasfasern. Die Rezepturen und Prüfergebnisse sind in Tabelle 5 aufgeführt.

Tabelle 1

**Diphosphinsäuren**

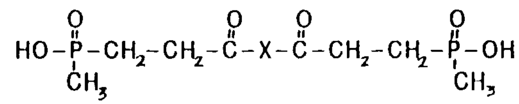

| Ver-bg. | X | M g/mol | Farbe | Schmelzpunkt (DSC-Peak) °C | % P ber. % | % P gef. % | % N ber. % | % N gef. % | Ausbeute[2] % | 1 DMF pro Mol Produkt |
|---|---|---|---|---|---|---|---|---|---|---|
| I | 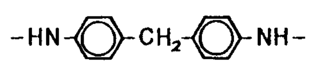 | 466 | weiß | 286 | 13,3 | 13,0 / 13,2 | 6,0 | 5,9 / 5,9 | 93 | 4,0 |
| II | 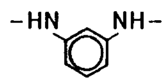 | 376 | weiß | 252 | 16,5 | 15,9 / 16,0 | 7,4 | 7,3 / 7,4 | 94 | 2,5 |
| III | 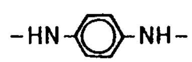 | 376 | weiß | 310-320 | 16,5 | 16,0 / 16,2 | 7,4 | 7,4 / 7,4 | 96 | 3,8 |
| IV | 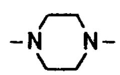 | 354 | leicht gelblich | 244 | 17,5 | 17,2 / 17,5 | 7,9 | 8,0 / 8,0 | 98 | 0,9 |
| V | -HN-NH- [1] | 300 | weiß | 243 | 20,7 | 20,5 / 20,6 | 9,3 | 9,3 / 9,3 | 45 [3] | 1,4 |
| VI | $-HN-(CH_2)_2-NH-$ | 328 | weiß | 240 | 18,9 | 18,6 / 18,9 | 8,5 | 8,5 / 8,5 | 95 | 1,9 |
| VII | $-HN-(CH_2)_6-NH-$ | 384 | weiß | 219 | 16,1 | 15,8 / 16,0 | 7,3 | 7,4 / 7,4 | 68 [3] | 2,0 |

[1]) Eingesetzt: Hydrazin-Hydrochlorid
[2]) Ber. auf Diamin, mit 5 mol-% Oxaphospholan-Überschuß
[3]) Ausbeuten nicht optimiert

Tabelle 2

| Beispiel | 1 | 2 | 3 | 4 | 5 | 6 | 7 | 8 | Vergl.-Bsp. 1 |
|---|---|---|---|---|---|---|---|---|---|
| PBT | 81,1 | 82,0 | 87,0 | 86,0 | 83,7 | 82,4 | 84,8 | 83,4 | 100 |
| Diphosphinsäure II | 12,0 | 15,0 | - | - | - | | - | - | - |
| Diphosphinsäure IV | - | - | 13,0 | 14,0 | 12,0 | 13,0 | - | - | - |
| Diphosphinsäure VI | - | - | - | - | - | | 11,0 | 12,0 | - |
| Melamin | 6,2 | 3,0 | - | - | 4,3 | 4,6 | 4,2 | 4,6 | - |
| P-Gehalt, ber. [%] | 2,0 | 2,5 | 2,3 | 2,5 | 2,1 | 2,3 | 2,1 | 2,3 | - |
| N-Gehalt, ber. [%] | 5,0 | 3,1 | 1,0 | 1,1 | 3,8 | 4,1 | 3,7 | 4,1 | - |
| Brandklasse UL 94, 1,6 mm | V-2 | V-0 | V-2 | V-2 | V-0 | V-0 | V-0 | V-0 | - |
| Gesamtnachbrennzeit [s] | 2 | 2 | 2 | 2 | 2 | 2 | 2 | 2 | - |
| Reißfestigkeit [$N/mm^2$] | 43 | 55 | 60 | 61 | 49 | 48 | 59 | 55 | 58 |
| Reißdehnung [%] | 1,4 | 2,1 | 3,3 | 3,4 | 1,8 | 1,7 | 2,6 | 2,3 | 3,6 |
| Kerbschlägzähigkeit nach Izod bei 23°C [$mJ/mm^2$] | 1,9 | 1,9 | 3,0 | 3,0 | 1,1 | 1,8 | 2,3 | 2,1 | 3,5 |

Tabelle 3

| Beispiel | 9 | 10 | 11 | 12 | 13 | 14 | 15 | 16 | 17 | 18 | 19 | Vergl.-Bsp. 2 |
|---|---|---|---|---|---|---|---|---|---|---|---|---|
| PBT | 52,0 | 55,0 | 53,3 | 52,5 | 50,0 | 55,0 | 52,0 | 50,0 | 52,9 | 48,4 | 51,4 | 70 |
| Diphosphinsäure I | 15,0 | - | - | - | - | - | - | - | - | - | - | - |
| Diphosphinsäure II | - | 15,0 | 12,0 | 15,0 | 15,0 | - | - | - | - | - | - | - |
| Diphosphinsäure III | - | - | - | - | - | 15,0 | 13,5 | 15,0 | - | - | - | - |
| Diphosphinsäure IV | - | - | - | - | - | - | - | - | 12,6 | 12,6 | 13,7 | - |
| Melamin | - | - | 4,7 | 2,5 | 5,0 | - | 4,5 | 5,0 | 4,5 | 9,0 | 4,9 | - |
| Benzoguanamin | 3,0 | - | - | - | - | - | - | - | - | - | - | - |
| Glasfaser | 30 | 30 | 30 | 30 | 30 | 30 | 30 | 30 | 30 | 30 | 30 | 30 |
| P-Gehalt, ber. [%] | 2,0 | 2,5 | 2,0 | 2,5 | 2,5 | 2,5 | 2,2 | 2,5 | 2,2 | 2,2 | 2,4 | - |
| N-Gehalt, ber. [%] | 2,0 | 1,1 | 4,0 | 2,8 | 4,4 | 1,1 | 4,0 | 4,4 | 4,0 | 7,0 | 4,3 | - |
| Brandklasse UL 94, 1,6 mm | V-2 | V-0 | V-0 | V-0 | V-0 | V-0 | V-0 | V-0 | V-0 | V-0 | V-0 | - |
| Gesamtnachbrennzeit [s] | 8,3 | 7,9 | 6,4 | 3,9 | 3,0 | 5,0 | 5,0 | 4,0 | 9,8 | 3,0 | 6,0 | - |
| Reißfestigkeit [N/mm²] | 119 | 133 | 160 | 141 | 144 | 130 | 143 | 135 | 136 | 126 | 142 | 155 |
| Reißdehnung [%] | 1,2 | 1,6 | 2,2 | 1,9 | 2,1 | 2,3 | 2,1 | 1,9 | 2,1 | 1,7 | 2,1 | 2,8 |
| Kerbschlägzähigkeit nach Izod bei 23°C [mJ/mm²] | 5,2 | 5,1 | 7,5 | 6,8 | 8,7 | 5,9 | 5,8 | 6,1 | 8,4 | 7,9 | 7,7 | 9,7 |

Tabelle 4

| Beispiel | 20 | 21 | Vergl.-Bsp. 3 |
|---|---|---|---|
| ®Impet 2600 GV 1/30 [1] | 88,0 | 85,4 | 85,0 |
| Diphosphinsäure III | 12,0 | - | - |
| Diphosphinsäure VI | - | 10,5 | - |
| Melamin | - | 4,1 | - |
| Melamincyanurat | - | - | 15,0 |
| P-Gehalt, ber. [%] | 2,0 | 2,0 | - |
| N-Gehalt, ber. [%] | 0,9 | 3,6 | 7,4 |
| Brandklasse UL 94, 1,6 mm | V-0 | V-2 | n.b. [2] |
| Gesamtnachbrennzeit [s] | 5 | 4 | |
| Reißfestigkeit [N/mm$^2$] | 90 | 43 | 84 |
| Reißdehnung [%] | 1,3 | 0,7 | 1,1 |
| Kerbschlägzähigkeit nach Izod bei 23 °C [mJ/mm$^2$] | 4,5 | | |

[1] PET der Hoechst AG, enthält 30 Gew.-% Glasfasern
[2] n.b. = nicht bestanden

Tabelle 5

| Beispiel | 22 | 23 |
|---|---|---|
| PBT | 50 | 50 |
| DPS II / Melaminsalz 1:1 | 20 | - |
| DPS II / Melaminsalz 1:2 | - | 20 |
| Glasfaser | 30 | 30 |
| P-Gehalt, ber. [%] | 2,5 | 2,0 |
| N-Gehalt, ber. [%] | 4,4 | 6,2 |
| Brandklasse UL 94, 1,6 mm | V-0 | V-1 |
| Gesamtnachbrennzeit [s] | 2,6 | 16,0 |
| Reißfestigkeit [N/mm$^2$] | 142 | 104 |
| Reißdehnung [%] | 2,1 | 1,3 |
| Kerbschlägzähigkeit nach Izod bei 23 °C [mJ/mm$^2$] | 7,8 | 6,3 |

## Patentansprüche

**1.** Flammgeschützte thermoplastische Polyesterformmasse aus
(A) einem oder mehreren thermoplastischen Polyester,
(B) einer stickstoffhaltigen Diphosphinsäure-Verbindung der Formel (I):

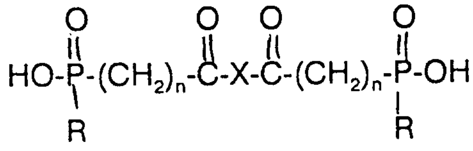

(I)

worin X für folgende stickstoffhaltige Reste steht

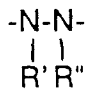 , 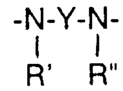 , 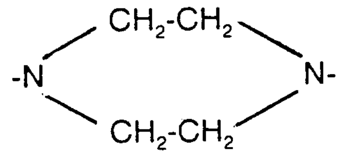

R für $C_1$- bis $C_8$-Alkyl oder Aryl mit 6 C-Atomen steht, R' und R" für Wasserstoff oder $C_1$- bis $C_8$-Alkyl steht, Y ein zweiwertiger aliphatischer, cycloaliphatischer oder aromatischer Kohlenwasserstoffrest ist, und n eine ganze Zahl von 1, 2, 3, 4 oder 5 ist,
(C) gegebenenfalls einem Amin,
(D) gegebenenfalls anorganischen Verstärkungsmitteln und
(E) gegebenenfalls Verarbeitungshilfsmitteln.

**2.** Flammgeschützte thermoplastische Polyesterformmasse aus den Komponenten gemäß Anspruch 1, wobei die Komponente (C) und die Komponente (B) in Form eines Reaktionsgemisches (BC) vorliegt.

**3.** Formmasse nach Anspruch 2, dadurch gekennzeichnet, daß das Aminsalz (BC) der stickstoffhaltigen Diphosphinsäure ein Melaminsalz oder ein Benzoguanaminsalz ist.

**4.** Formmasse nach einem oder mehreren der Ansprüche 1 bis 3, dadurch gekennzeichnet, daß sie 1 bis 40 Gew.-Teile, vorzugsweise 5 bis 30 Gew.-Teile, der Komponente (B) und 1 bis 10 Gew.-Teile eines aminosubstituierten 1,3,5-Triazin-Derivates als Komponente (C) enthält.

**5.** Formmasse nach den Ansprüchen 2 und 3, dadurch gekennzeichnet, daß das Mol-Verhältnis von (B) zu (C) in der Komponente (BC) 1:1 oder 1:2 beträgt.

**6.** Formmasse nach den Ansprüchen 1 und 4, dadurch gekennzeichnet, daß als Komponente (C) Melamin oder Benzoguanamin enthalten ist.

**7.** Formmasse nach einem oder mehreren der Ansprüche 1 bis 6, dadurch gekennzeichnet, daß sie als anorganische Verstärkungsmittel (D) Glasfasern, Glaskugeln und/oder mineralische Füllstoffe enthält.

**8.** Formmasse nach einem oder mehreren der Ansprüche 1 bis 7, dadurch gekennzeichnet, daß der Polyester Polybutylenterephthalat ist.

**9.** Formmasse nach einem oder mehreren der Ansprüchen 1 bis 7, dadurch gekennzeichnet, daß der Polyester Polyethylenterephthalat ist.

**10.** Formmasse nach einem oder mehreren der Ansprüche 1 bis 9, dadurch gekennzeichnet, daß sie Kristallisationshilfsmittel, Entformungshilfsmittel, Antitropfmittel, Stabilisatoren, Fließhilfsmittel, Farbmittel und/oder Weichmacher enthält.

**11.** Formmasse nach Anspruch 10, dadurch gekennzeichnet, daß sie als Antitropfmittel 0,01 - 5 Gew.-Teile fluorierte Polyolefine enthält.

**12.** Verwendung der flammgeschützten Polyesterformmasse nach Anspruch 1 zur Herstellung von Formkörpern, Folien oder Fasern.

Europäisches Patentamt

# EUROPÄISCHER RECHERCHENBERICHT

Nummer der Anmeldung

EP 93 10 0280

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 394 330 (HARDY, T.A. ET AL.)<br>* Spalte 1, Zeile 13 - Zeile 16; Beispiele 2-4 *<br>--- | 1 | C08K5/5313<br>C07F9/36<br>C07F9/6509<br>C08L67/02 |
| A | FR-A-2 368 495 (HOECHST AG)<br>* Seite 2, Zeile 1 - Seite 3, Zeile 18; Ansprüche 1,5 *<br>--- | 1 | |
| A,D | DE-A-2 447 726 (HOECHST AG)<br>* das ganze Dokument *<br>----- | 1 | |

RECHERCHIERTE SACHGEBIETE (Int. Cl.5 )

C08K
C07F

Der vorliegende Recherchenbericht wurde für alle Patentansprüche erstellt

| Recherchenort | Abschlußdatum der Recherche | Prüfer |
|---|---|---|
| BERLIN | 28 APRIL 1993 | VOIGTLAENDER R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)